(19) **Europäisches Patentamt / European Patent Office / Office européen des brevets**

(11) **EP 1 883 175 B1**

(12) **EUROPEAN PATENT SPECIFICATION**

(45) Date of publication and mention
of the grant of the patent:
**09.09.2009 Bulletin 2009/37**

(51) Int Cl.:
*H04J 3/06* (2006.01)    *H04L 27/26* (2006.01)
*H04L 5/02* (2006.01)

(21) Application number: **07021937.3**

(22) Date of filing: **07.03.2005**

(54) **Apparatus and method for assigning a ranging channel and transmitting and receiving a ranging signal in an OFDM system**

Vorrichtung und Verfahren zur Zuweisung eines Kanals zur Abstandsbestimmung und zur Übertragung und zum Empfang eines Signals zur Abstandsbestimmung in einem OFDM-System

Dispositif et procédé d'assignement d'un canal de mesure de distance et de transmission et réception d'un canal de mesure de distance dans un système OFDM

(84) Designated Contracting States:
**DE FR GB IT SE**

(30) Priority: **05.03.2004 KR 20040015983**

(43) Date of publication of application:
**30.01.2008 Bulletin 2008/05**

(62) Document number(s) of the earlier application(s) in accordance with Art. 76 EPC:
**05004950.1 / 1 571 770**

(73) Proprietor: **Samsung Electronics Co., Ltd**
**Suwon-si, Gyeonggi-do 443-742 (KR)**

(72) Inventors:
• **Sung, Sang-Hoon**
 **Yeongtong-gu**
 **Suwon-si**
 **Gyeonggi-do (KR)**
• **Jeon, Jae-Ho**
 **Yeongtong-gu**
 **Suwon-si**
 **Gyeonggi-do (KR)**
• **Yoon, Soon-Young**
 **Yeongtong-gu**
 **Suwon-si**
 **Gyeonggi-do (KR)**

• **Maeng, Seung-Joo**
 **Yeongtong-gu**
 **Suwon-si**
 **Gyeonggi-do (KR)**
• **Cho, Jae-Hee**
 **Yeongtong-gu**
 **Suwon-si**
 **Gyeonggi-do (KR)**
• **Huh, Hoon**
 **Yeongtong-gu**
 **Suwon-si**
 **Gyeonggi-do (KR)**
• **Hwang, In-Seok**
 **Yeongtong-gu**
 **Suwon-si**
 **Gyeonggi-do (KR)**
• **Lee, Jae-Hyok**
 **Yeongtong-gu**
 **Suwon-si**
 **Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
 **WO-A-02/07375**       **WO-A-20/05086398**
 **US-A1- 2003 198 179**    **US-A1- 2005 041 573**

**Description**

The present invention relates to an apparatus and a method for allocating a ranging channel and transmitting and receiving a ranging signal in a communication system employing an orthogonal frequency division multiplexing scheme.

Currently, the 3rd generation (3G) communication system supports a transmission speed of about 384 Kbps in outdoor environment relatively having poor channel conditions, and supports a transmission speed of about 2 Mbps in favorable indoor channel environment. In addition, many researches have been focused onto the 4th generation (4G) communication system to provide users with various qualities of service (QoS) and transmission speed of about 100 Mbps.

A wireless local area network (WLAN) communication system and a wireless metropolitan area network (WMAN) communication system generally support transmission speeds of 20 to 50 Mbps. The WLAN system and the WMAN system may provide a comparatively high transmission speed, but do not satisfactorily ensure mobility and various QoSs. Accordingly, research is being vigorously pursued to evolve the current communication system into a 4G communication system in order to simultaneously ensuring both the very high data rate and mobility.

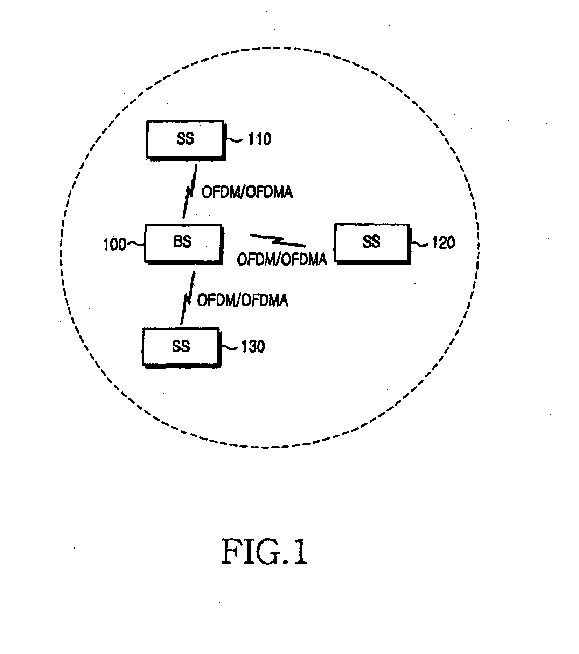

FIG. 1 is a schematic view of illustrating a broadband wireless access communication system employing an orthogonal frequency division multiplexing/orthogonal frequency division multiple access (OFDM/OFDMA) scheme, wherein it transmits a physical channel signal using a plurality of sub-carriers.

Referring to FIG. 1, the broadband wireless access communication system has a single cell structure, and includes a base station (BS) 100 and a plurality of subscriber stations (SSs) 110, 120, and 130. The transmission and reception of signals between the BS 100 and the SSs 110, 120, and 130 is according to an OFDM/OFDMA scheme.

In general, the multiple access method in OFDMA can be achieved by either one or combination of a time division technique and a frequency division technique. The transmitted symbols are carried by a set of subcarrier, subchannel, in which each subcarrier can be localized differently in time and frequency..

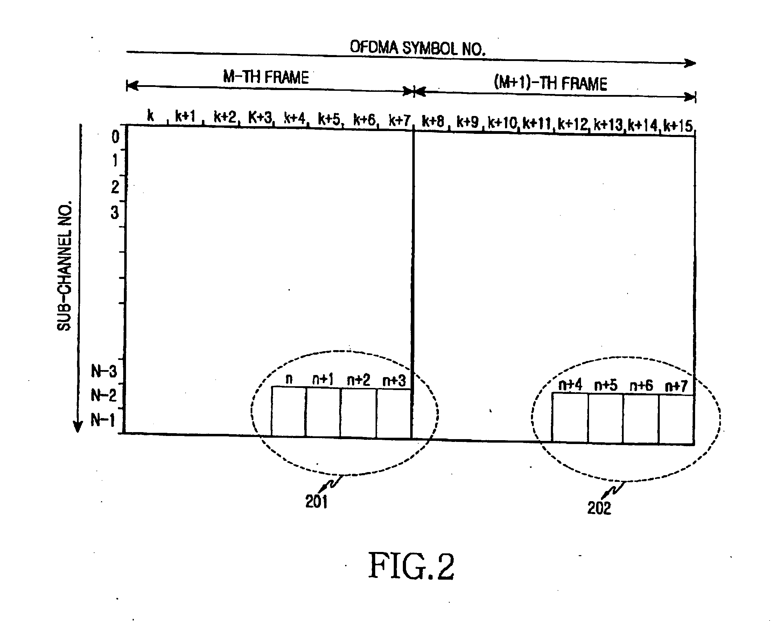

FIG. 2 schematically illustrates one example of OFDMA frame structure. Referring to FIG. 2, OFDMA symbol numbers are plotted along the abscissa axis and sub-channel numbers are plotted along the ordinate axis. Further, one OFDMA frame includes a plurality of OFDMA symbols, e.g., eight OFDMA symbols.

The physical channel for transmitting ranging signal is addressed herein, although the purpose of ranging signal will be addressed later. Each OFDMA frame as constructed above has a plurality of ranging slots, e.g., four ranging slots, for transmitting a ranging signal. The plurality of ranging slots form a ranging region. Reference numeral 201 designates a ranging region existing in an M-th frame, and reference numeral 202 designates a ranging region existing in an (M+1)-th frame. The ranging region is a ranging channel. The ranging channel includes at least one sub-channel, provided that it exists only during an uplink period. The existing OFDMA communication system such as IEEE802.16a has been designed to acquire a frequency diversity gain by distributing all sub-carriers over an entire frequency band.

When a time division duplexing (TDD) technique is applied to the OFDMA communication system, a subscriber station (SS) is required to perform a ranging operation in order to synchronize in time between multiple subscriber stations (SS's) on the transmitting side and a BS on the receiving side, and to adjust reception power of the BS. This requirement in TDD system can be met by transmitting ranging signal to BS from SS.

The ranging operation is divided into initial ranging and maintenance ranging. The maintenance ranging is in turn further classified into periodic ranging and bandwidth request ranging.

Hereinafter, a description will be given for a ranging operation that is commonly used in a conventional broadband wireless communication system.

First, the initial ranging is performed by SS who wants to acquire timing sync and transmit power setting with a BS. For example, the operational procedure is as follow in IEEE802.16a/e TDD mode. The SS is powered on and start to synchronize in down link by signal processing of preamble and pilot. After downlink synchronization is completed, the SS starts to receive control message such as a DL_MAP message, an UL_MAP message and an UCD message. Thereafter, the SS performs the initial ranging with the BS, in order to adjust the time offset and the transmit power.

The periodic ranging is operation by the SS already having adjusted the time offset and the transmit power through the initial ranging with the BS. The SS periodically performs periodic ranging, in order to track time offset with the BS and a channel state, etc. The SS performs the periodic ranging using ranging codes assigned by the BS.

The bandwidth request ranging is operation by the SS, already having adjusted the time offset and the transmit power through the initial ranging in order to request bandwidth that can actually be used for communication with the BS.

Ranging sub-channels and ranging codes are needed to generate ranging signal. This has been already described with reference to FIG. 2. The BS predefines ranging codes of respective ranging operation. More specifically, the ranging codes are assigned as described below.

The ranging codes are usually generated by segmenting a sequence having a predetermined length by a predetermined unit. As an example of a sequence for generating ranging codes, a pseudorandom noise (PN) sequence having a length of 32767 bits may be used. The PN sequence is segmented into PN codes through the ranging channel having a certain length (the length of 106 bits, for example) to construct ranging codes by the PN codes.

Supposing that N ranging codes are assigned for initial ranging, M ranging codes are assigned for periodic ranging and L ranging codes are assigned for bandwidth request ranging. The assigned ranging codes are then transmitted to SSs through a DL-MAP message. The SSs use the ranging codes included in the DL_MAP message suitably to their purposes to perform ranging procedures.

However, the SS randomly selects ranging slots and ranging codes for the initial ranging, the periodic ranging, and the bandwidth request ranging in the OFDMA communication system. Consequently, a collision between either different ranging codes in the same time slot or same ranging codes in the same time slot frequently occurs. If the collision between ranging codes occurs, it is quite probable that a BS fails in recognizing the ranging code of the SS. This is one cause for delaying access between the BS and the SS. Consequently, the access delay deteriorates performance of the OFDMA communication system.

In performing the periodic ranging and the bandwidth request ranging, the OFDMA scheme utilizes a random access method in which a random ranging code is transmitted through a random ranging slot. Therefore, it is likely that the ranging codes collide with each other. If the collision between ranging codes occurs, a re-access process is tried after exponential random back-off in time. In this case, access delay time becomes longer and system access delay time cannot be guaranteed. More specifically, the higher the probability of ranging code collision is, the longer an access delay time becomes. Accordingly, when SSs attempt wireless random access to a BS, the following points must be taken into consideration: First, ranging performed by the SS can be regarded as contention ranging because each SS randomly selects ranging codes and ranging time slots. Here, for contention ranging the same transmission time slot, the same frequency, and the same code may be used in common by a plurality of SSs. As a result, access time delay is caused by an intercollision between ranging codes during initial access or handover. Even if only one ranging signal is transmitted on a ranging frequency band, the BS may fail to detect the signal if the signal strength is not enough. Second, because each cell in cellular network uses different frequency band for ranging (frequency positions of ranging sub-carriers), inter-cell interference between a ranging signal and a data signal is incurred. For example, because an SS A located in a cell under the control of a BS A does not use the same ranging transmission frequency as that of an SS B located in a cell under the control of a BS A, a ranging signal of the SS A interferes with the BS B. Also, a ranging signal of the SS B interferes with the BS A. If the intensity of the ranging signal transmitted by the SS A excessively interferes with the BS B (so-called near-far problem), the transmission power adjustment of the SS A must be limitative. Therefore, it takes considerable time for the SS to adjust the ranging signal to an intensity level at which the BS A can receive the ranging signal, with the result that initial access time of the system becomes longer. Third, the PN code used as a ranging code does not ensure that an intercode cross-correlation characteristic has orthogonality. That is, when the PN codes share the transmission time slot and the transmission frequency with each other, code interference is incurred for lack of orthogonality between the ranging codes, which results in deterioration of ranging performance. Fourth, because frequencies for ranging (frequency positions of ranging sub-carriers) are randomly distributed over the entire available band, a code correlation characteristic between the ranging codes is not maintained due to fluctuation of the channel frequency response. This may cause increased code interference. That is, when a wireless access channel is a multipath channel, the code correlation characteristic is deteriorated because the channel shows frequency selectivity, that is, its channel response varies with frequency. The increased code interference arisen by the reasons mentioned above results in ranging failure of the SSs.

US 2003/198179 A1 relates to a ranging method for a broadband wireless access system and more particularly to a ranging method for a mobile communication system using an orthogonal frequency division multiple access scheme.

WO 02/07375 A concerns a frequency division multiple access signal formed by a multiplex of carrier frequencies transmitted by at least two separate terminals and designed to be processed in the form of a single signal in the base station bearing temporal synchronizing data comprising, for at least some of the terminals, a phase deterministic value simultaneously and continuously transmitted on at least two of said carrier frequencies for a duration not less than two symbol times.

Accordingly, the present invention has been designed to solve the above and other problems occurring in the prior art. An aspect of the present invention is to provide an apparatus and a method for assigning a cell shared frequency band to a ranging channel in order to minimize signal interference with data.

It is another aspect of the present invention to provide a ranging channel structure that permits a collision between ranging signals, but prevents interference between a ranging signal and a data signal.

It is still another aspect of the present invention to provide an apparatus and a method for receiving a ranging signal such that a collision between ranging signals is allowed, but interference between a ranging signal and a data signal is prevented.

It is yet another aspect of the present invention to provide an apparatus and a method for transmitting a ranging signal such that a collision between ranging signals is allowed, but interference between a ranging signal and a data signal is prevented.

It is a further aspect of the present invention to provide an apparatus and a method for receiving a ranging channel for the acquisition of uplink synchronization, such that signal interference can be minimized.

It is yet a further aspect of the present invention to provide an apparatus and a method for transmitting and receiving a ranging signal such that an initial access time of a system can be minimized.

In order to accomplish the above and other aspects, there is provided a method for transmitting a ranging signal in an OFDM/OFDMA communication system. The method includes the steps of: determining an uplink frame where ranging is to be attempted; and transmitting ranging codes corresponding to a desired ranging class through one or more ranging bands which constructs a ranging channel assigned for the determined uplink frame, wherein a frequency band fixed regardless of BSs within the entire frequency band is used as the ranging band, and the fixed frequency band is a set of one sub-carrier or two or more sub-carriers which consecutively exist on a frequency axis.

In accordance with still another aspect of the present invention, there is provided an apparatus for transmitting a ranging signal in an OFDM/OFDMA communication system. The apparatus includes: a ranging band assigning unit for inputting ranging codes corresponding to a desired ranging class and outputting the ranging codes at one or more ranging bands which construct a ranging channel assigned for an uplink frame where ranging is to be attempted; and an inverse fast Fourier transform unit for transforming the ranging codes output at the one or more ranging bands into time domain ranging bands, wherein a frequency band fixed regardless of BSs within the entire frequency band is used as the ranging band, and the fixed frequency band is a set of one sub-carrier or two or more sub-carriers which consecutively exist on a frequency axis.

The above and other objects, features, and advantages of the present invention will be more apparent from the following detailed description taken in conjunction with the accompanying drawings, in which:

FIG. 1 is a schematic view illustrating a broadband wireless access communication system utilizing an OFDM/OFDMA scheme;

FIG. 2 is a diagram illustrating a frame structure of a broadband wireless access communication system utilizing an OFDM/OFDMA scheme in a timefrequency domain;

FIGs. 3A to 3C are diagrams illustrating a ranging channel structure of a TDD broadband wireless access communication system utilizing an OFDM/OFDMA scheme in accordance with a preferred embodiment of the present invention;

FIG. 4 is a block diagram illustrating a ranging receiver of a broadband wireless access communication system utilizing an OFDM/OFDMA scheme in accordance with a preferred embodiment of the present invention;

FIG. 5 is a block diagram illustrating a detailed construction of the ranging code multiplier illustrated in FIG. 4;

FIG. 6 is a block diagram illustrating a detailed construction of the sync detector illustrated in FIG. 4;

FIG. 7 is a flowchart illustrating a control flow according to the operation of the sync comparator illustrated in FIG. 4;

FIG. 8 is a block diagram illustrating a bandwidth request ranging receiver of a broadband wireless access communication system utilizing an OFDM/OFDMA scheme in accordance with a preferred embodiment of the present invention;

FIG. 9 is a flowchart illustrating a control flow according to the operation of the ranging code comparator illustrated in FIG. 8;

FIG. 10 is a block diagram illustrating a ranging transmitter of a broadband wireless access communication system utilizing an OFDM/OFDMA scheme in accordance with a preferred embodiment of the present invention; and

FIG. 11 is a flowchart illustrating a control flow carried out by a ranging receiver in a broadband wireless access communication system utilizing an OFDM/OFDMA scheme in accordance with a preferred embodiment of the present invention.

Preferred embodiments of the present invention will be described in detail herein below with reference to the accompanying drawings. In the following description, a detailed description of known functions and configurations incorporated herein will be omitted when it may make the subject matter of the present invention rather unclear.

The present invention provides a ranging channel structure, which improves reception performance of a ranging signal in order to minimize wireless access delay time in a communication system utilizing an OFDMA scheme, i.e., an OFDMA communication system.

Items proposed in accordance with preferred embodiments of the present invention to be described later will be summarized herein below.

First, in a conventional OFDMA communication system, signal interference between a ranging signal and a data signal occurs among cells because frequency positions of ranging sub-carriers are different cell by cell. The present invention proposes a cell shared ranging frequency band in order to minimize the signal interference with data. This causes an SS A of a BS A and an SS B of a BS B to use a shared ranging frequency band, such that a collision between signals of neighbor cells may be allowed, but signal interference between a ranging signal and a data signal does not occur.

Secondly, because frequencies for ranging, i.e., frequency positions of ranging sub-carriers, are distributed similarly to random distribution over the entire available band, a code correlation characteristic between ranging codes is not maintained and code interference is increased. Accordingly, the present invention proposes a scheme of assigning a ranging frequency band such that effective ranging performance is presented even in a channel that shows frequency selectivity, that is, a channel response of which seriously varies with frequency, a channel diversity effect can be obtained, and the probability of false code alarm can be reduced.

Hereinafter, a description will be given for a ranging channel structure newly proposed by the present invention and its operating scheme with reference to the accompanying drawings. Although the ranging channel structure and its operating scheme will be described below with respect to a TDD system, it is obvious to the skilled in the art that they can be similarly applied to an FDD system.

A frame used in the TDD system has a structure in which a downlink frame and an uplink frame are alternately used on a time axis. Also, the number of ranging channels that are assigned only to an uplink frame may be variably adjusted every frame according to BSs.

The assignment of the ranging channel, frame by frame, is accomplished by an UL-MAP message broadcasted from the BS. Accordingly, allocation information of primary ranging channel and secondary ranging channel is included in the UL_MAP message. In particular, the secondary channel is a ranging channel that can be additionally used, aside from the primary ranging channel, according to a specific situation of the cell.

In assigning the ranging channel, the BS may additionally assign the secondary ranging channel after the assignment of the primary ranging channel. An SS desiring to attempt ranging during an uplink frame period to which the BS does not give permission for the use of the secondary ranging channel must transmit ranging codes using only the primary ranging channel. Otherwise, an SS desiring to attempt ranging during an uplink frame period to which the BS gives permission for the use of the secondary ranging channel selects one of the primary and secondary ranging channels and then transmits ranging codes through the selected ranging channel. However, the BS may not assign the ranging channel to a specific uplink frame. Of course, when the BS does not give permission for the use of both the primary and secondary ranging channels to a specific uplink frame, no SS can transmit ranging codes through the uplink frame.

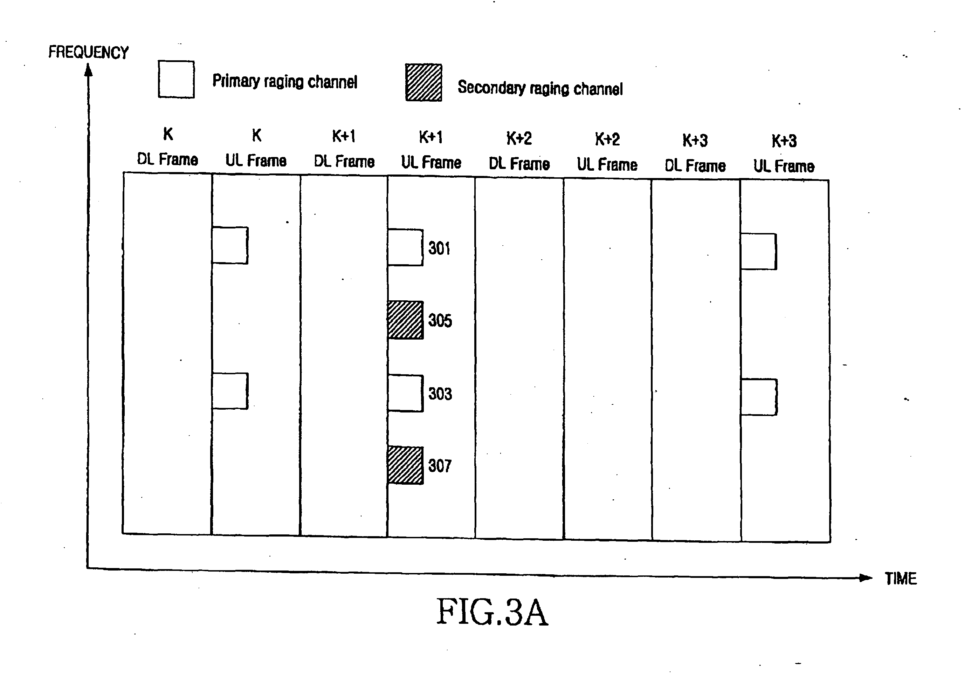

FIGs. 3A to 3C are diagrams illustrating a ranging channel structure newly proposed according to an embodiment of the present invention, on the basis of a TDD system.

In FIG. 3A, ranging channel configuration in a uplink/downlink frame structure used in the TDD system is plotted in a frequency-time domain. More specifically, only a primary ranging channel is assigned to a K-th uplink frame and a (K+3)-th uplink frame, but primary and secondary ranging channels are assigned to a (K+1)-th uplink frame. Therefore, an SS accessing the (K+3)-th uplink frame can transmit ranging codes only through the primary ranging channel.

In contrast with this, an SS accessing the (K+1)-th uplink frame can select one of the primary and secondary ranging frame, and then transmit ranging codes through the selected ranging channel.

Each of the primary and secondary ranging channels includes a set of one sub-carrier or two or more consecutive sub-carriers in a frequency domain (ranging band) 301, 303, 305, and 307. Although FIG. 3A illustrates only an example in which one ranging channel includes two ranging bands (primary and secondary ranging bands), it is obvious to the skilled in the art that the ranging channel may include more ranging bands.

Herein, ranging bands 301 and 303 of the primary ranging channel (primary ranging bands) within one uplink frame are arranged at a certain distance on a frequency axis. Ranging bands 305 and 307 of the secondary ranging channel (secondary ranging bands) within one uplink frame are also arranged at a constant distance on the frequency axis. The primary ranging bands 301 and 303 and the secondary ranging bands 305 and 307 are alternately arranged within an uplink frame to which both the primary and secondary ranging channels are assigned. This can be easily seen from the structure of the (K+1)-th uplink frame. However, it is also possible to arrange the ranging bands such that the primary ranging bands consecutively exist and the secondary ranging bands consecutively exist.

Each of the primary ranging bands assigned to the (K+1)-th and (K+3)-th frames exists in the same frequency region. This is the same to the secondary ranging bands. That is, the ranging bands use the same frequency region even if they are assigned to different uplink frames.

However, no ranging channel is assigned to a (K+2)-th uplink frame. Consequently, an SS desiring to attempt ranging during the (K+2)-th uplink frame period cannot transmit ranging codes.

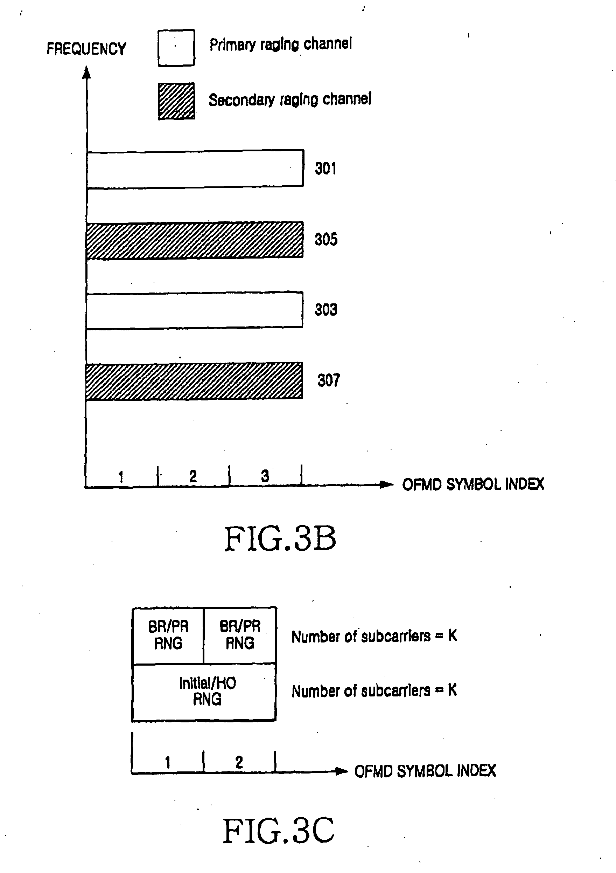

FIG. 3B illustrates an enlarged ranging channel structure in the (K+1)-th uplink frame of FIG. 3A, to which both the primary and secondary ranging channels are assigned. Referring to FIG. 3B, each of the primary and secondary ranging bands 301, 303, 305, and 307 include three OFDM symbols. However, each ranging band may consist of two OFDM symbols. When each ranging band includes two OFDM symbols, the two OFDM symbols correspond to a first symbol and a second symbol of the relevant uplink frame.

FIG. 3C illustrates an example in which initial ranging /handover ranging and bandwidth request ranging/periodic ranging are arranged in the ranging bands 301, 303, 305, and 307 of the assigned ranging channels. Referring to FIG. 3C, some of sub-carriers included in the ranging band are used for initial ranging (initial RNG) and handover ranging (HO RNG), and the other sub-carriers are used for bandwidth request ranging (BR RNG) and periodic ranging (PR RNG). Two symbols are used for the initial ranging (initial RNG) and the handover ranging (HO RNG). The two symbols use the same frequency region, but they are distinguished by ranging codes. However, only one symbol is used for the bandwidth request ranging (BR RNG) and the periodic ranging (PR RNG). Two symbols existing in the same ranging band use the same frequency region, but they are distinguished by different ranging codes.

Therefore, for the initial ranging and the handover ranging, an SS has only one opportunity to attempt ranging over a period of the two symbols. However, an SS can choose one of two opportunities and attempt ranging in case of the bandwidth request ranging and the periodic ranging. Each of the ranging bands include K sub-carriers. However, because each SS uses two ranging bands, it can use 2K sub-carriers. Accordingly, the length of the ranging code is 2K.

In order that a BS assigns ranging bands of the primary and secondary ranging channels as described above, several things must be taken into consideration. One thing is that the primary and secondary ranging bands must use a fixed frequency band assigned regardless of BSs. However, an isolated BS, which is located far from other BSs and is insensitive to signal interference, can divide a frequency band and use the divided frequency bands. Such a method of assigning a frequency band is intended to prevent a ranging signal between cells adjacent to each other from acting as interference with data signal of a neighbor BS.

Hereinafter, a detailed description will be additionally given for a ranging channel used in the present invention and a relation between ranging bands included in the ranging channel.

The ranging channel may include N ranging bands. Here, N is an involution of 2. That is, N = 1, 2, 4, 8, 16, ..., K. If the number of sub-carriers is K, K sub-carriers are assigned to one ranging band when N = 1, K/2 sub-carriers are assigned to one ranging band when K = 2, K/4 sub-carriers are assigned to one ranging band when K = 4, and one sub-carrier is assigned to one ranging band when K = K.

The ranging channel used in the embodiment of the present invention is an available frequency band which an SS uses for attempted ranging, and the ranging band as a component constituting the ranging channel is an available frequency band of consecutive ranging sub-carriers.

Hereinafter, a structure of a receiver provided at a BS in the embodiment of the present invention and its operation based on this structure will be described in detail with reference to the accompanying drawings. The receiver is divided into a receiver for receiving ranging codes to acquire uplink sync and a receiver for detecting bandwidth request ranging. Accordingly, the following description will be given separately for the two receivers.

In the receiver for receiving ranging codes to acquire uplink sync, the ranging codes are transmitted by an SS, and a BS receives the transmitted ranging codes to acquire uplink sync. The receiver to be described below may be provided at the BS.

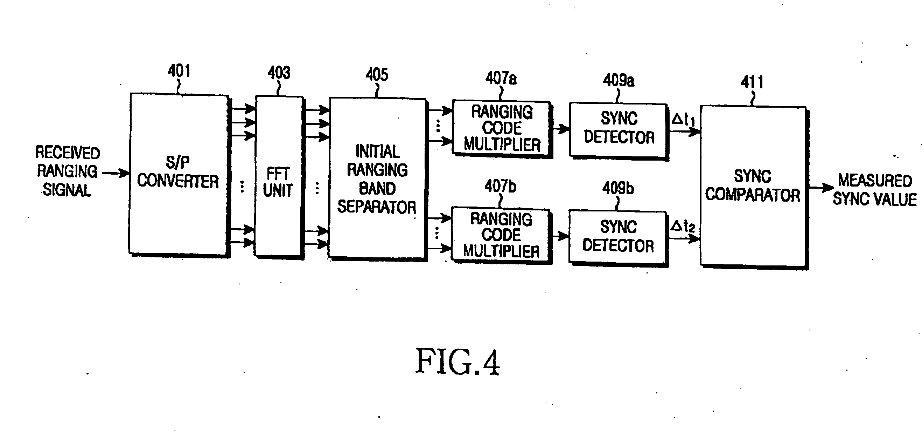

FIG. 4 illustrates a receiver for acquiring uplink sync by a ranging signal in accordance with an embodiment of the present invention. More specifically, the receiver illustrated in FIG. 4 includes a serial/parallel (S/P) converting unit 401, an FFT unit 403, an initial ranging band separating unit 405, a plurality of ranging code multiplying units 407a and 407b, a plurality of sync detecting units 409a and 409b, and a sync comparing unit 411.

Referring to FIG. 4, a ranging signal received from an SS is supplied to the S/P converting unit 401. The S/P converting unit 401 converts the ranging signal into parallel signals and outputs the converted parallel signals. The parallel ranging signals are supplied to the FFT unit 403. The FFT unit 403 performs fast Fourier transform to the parallel ranging signals to transform time-domain ranging signals into frequency-domain ranging signals and outputs the frequency-domain ranging signals. The parallel ranging signals transformed into the frequency-domain ranging signals are supplied to the initial ranging band separating unit 405. The initial ranging band separating unit 405 separates ranging bands assigned for initial ranging from the respective frequency-domain parallel ranging signals. The initial ranging band separating unit 405 also extracts only sample values from the separated ranging bands and outputs the extracted sample values. The sample values are supplied to correspondent ranging code multiplying units 407a and 407b.

The ranging code multiplying units 407a and 407b multiply the supplied sample values by predetermined ranging codes and output the sample values multiplied by the predetermined ranging codes. The signals output from the ranging code multiplying units 407a and 407b and supplied to correspondent sync detecting units 409a and 409b exhibit a frequency characteristic of a channel. The sync detecting units 409a and 409b take a correlation between input signals and predetermined phase adjustment values, and output a phase adjustment value having a maximum correlation value as a measured sync value $\Delta t_1$ and $\Delta t_2$. The measured sync values $\Delta t_1$ and $\Delta t_2$ output from the respective sync detecting units 409a and 409b are supplied to the sync comparing unit 411. The sync comparing unit 411 compares the measured sync values $\Delta t_1$ and $\Delta t_2$ with each other to output a maximum value as a final measured sync value.

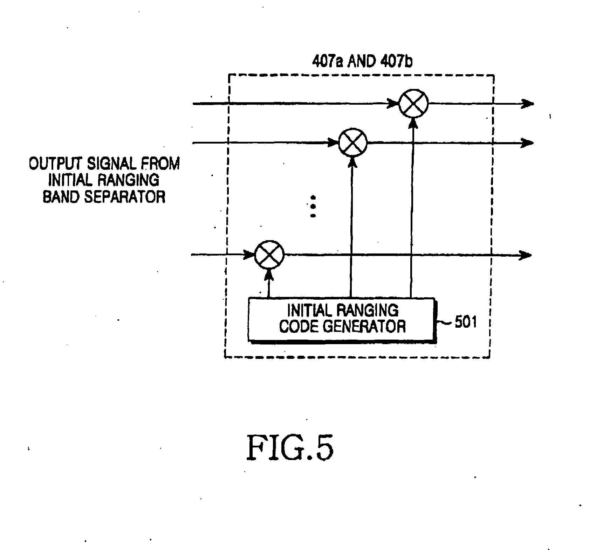

FIG. 5 illustrates an example using the ranging code multiplying units 407a and 407b as illustrated in FIG. 4. Referring to FIG. 5, a plurality of output signals supplied from the initial ranging band separating unit 405 are input to corresponding multipliers, respectively. An initial ranging code generator 501 generates initial ranging codes, which are managed by a BS, and provides the initial ranging codes as another input to the corresponding multipliers. The multipliers multiply the signals supplied from the initial ranging band separating unit 405 by the initial ranging codes provided from the initial ranging code generator 501 and output the resultant signals. That is, the multipliers perform complex multiplication for the frequency-domain signals output from the initial ranging band separating unit 405. For an output signal having a specific initial ranging code component from among the output signals, the specific initial ranging code component is eliminated.

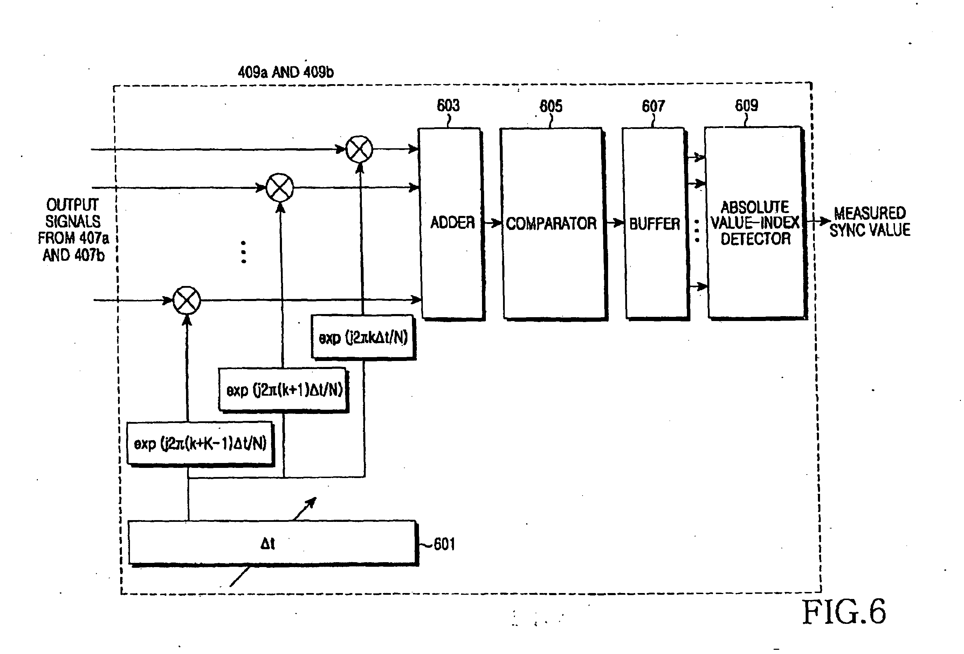

FIG. 6 illustrates an example using the sync detecting units 409a and 409b, which are illustrated in FIG. 4. Referring to FIG. 6, output signals from the ranging code multiplying units 407a and 407b are input to corresponding multipliers. For convenience of explanation, it is assumed that, of the signals output from the initial ranging multiplying units 407a and 407b, the output signal from the initial ranging multiplying unit 407a is input to the sync detecting unit 409a. However, it is obvious to the skilled in the art that an operation to be described below can be similarly applied to a case where the output signal from the initial ranging multiplying unit 407b is input to the sync detecting unit 409b.

Each of the multipliers implements complex multiplication of an output signal input to itself and specific phase information. This may correspond to an operation for taking a correlation between the output signal and the specific phase information provided according to sub-carrier indexes. The specific phase information can be defined using Equation (1):

$$\exp(\frac{j2\pi k \Delta t}{N}) \qquad \dots\dots\dots\dots\dots\dots\dots\dots\dots\dots\dots(1)$$

where,

N: output sample size of IFFT unit or FFT unit;
k: sub-carrier index of sample output from initial ranging band separating unit;
$\Delta t$: arbitrary integer value subjected to brutal force in order to estimate actual timing offset of ranging signal $(-N < \Delta t < N)$.

The specific phase information input to the multipliers is generated according to sub-carrier indexes of the output sample from the ranging code multiplying unit 407a. The sub-carrier index is determined in a range of k to k+K-1. Here, K is the number of sub-carriers assigned to the initial ranging band.

The specific phase information generated according to sub-carrier indexes has been defined as above in Equation (1). However, in order to generate the specific phase information, a phase adjustment value generating unit 601 successively generates all predetermined phase adjustment values. That is, the phase adjustment values are applied to Equation (1) and output as specific phase information according to sub-carrier indexes. The specific phase information is then input to a multiplier of the above described multipliers.

The phase-adjusted signals from the respective multipliers are input to an adder 603. The adder 603 adds the phase-adjusted signals to each other to output one phase-adjusted signal. The phase-adjusted signal output from the adder 603 has a peak value when the phase adjustment value $\Delta t$ is equal to timing offset of the ranging signal.

The phase-adjusted signal form the adder 603 is input to a comparator 605. The comparator 605 compares the phase-adjusted signal with a predetermined threshold value thr. As a result of comparison, if the phase-adjusted signal is equal to or larger than the predetermined threshold value thr, the comparator 605 transfers the phase-adjusted signal to a buffer 607. The phase adjustment value $\Delta t$, which has been generated by the phase adjustment value generating unit 601 in order to obtain the phase-adjusted signal, is supplied together to the buffer 607. However, if the phase-adjusted signal is less than the predetermined threshold value thr, the comparator 605 eliminates the phase-adjusted signal.

The above-described operation is implemented for all phase adjustment values, which can be generated from the phase adjustment value generating unit 601. Therefore, the phase-adjusted signals output from the comparator 605 are stored together with the corresponding adjustment value in the buffer 607.

When the above-described operation is completed for all the phase adjustment values, the buffer 607 outputs the phase-adjusted signals and the corresponding phase adjustment values stored therein to an index detector 609. The index detector 609 detects a phase-adjusted signal having a maximum value of the phase-adjusted signals, and checks a phase adjustment value corresponding to the detected phase-adjusted signal to output the phase adjustment value as a measured sync value.

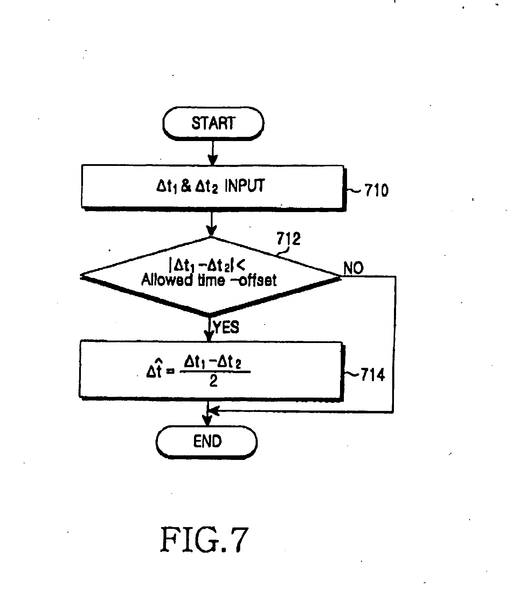

FIG. 7 illustrates a control flow according to the operation of the sync comparing unit 411 illustrated in FIG. 4. The sync comparing unit 411 determines a final measured sync value using measured sync values provided from the sync detecting units to acquire uplink sync.

Referring to FIG. 7, the sync comparing unit 411 inputs measured sync values $\Delta t_1$ and $\Delta t_2$ from the plurality of sync detecting units 409a and 409b in step 710. In step 712, the sync comparing unit 411 determines if the absolute value $|\Delta t_1, \Delta t_2|$ of a difference between the measured sync values is less than a predetermined threshold value (allowed time offset). If this condition is satisfied, the sync comparing unit 411 proceeds to step 14. However, if the condition is not satisfied, the sync comparing unit 411 concludes sync estimation to be failed and terminates the initial ranging operation.

In step 714, the sync comparing unit 411 calculates a final measured sync value using Equation (2) and outputs the final measured sync value.

$$\Delta t = \frac{\Delta t_1 + \Delta t_2}{2} \quad \dots\dots\dots\dots\dots\dots\dots\dots\dots (2)$$

The final measured sync value output by Equation (2) is a timing offset. The obtained timing offset is included in an RNG-RSP message and is broadcasted. Thereafter, the initial ranging operation comes to an end.

The above-described operation for adjusting timing offset of initial ranging is identical to those for adjusting timing offset of handover ranging and periodic ranging. However, for handover ranging, the initial ranging band separating unit 405 and the initial ranging code multiplying units 407a and 407b in FIG. 4 must be replaced by a handover ranging band separating unit and handover ranging code multiplying units, respectively. Also, the initial ranging code generator 501 in FIG. 5 must be replaced by a handover ranging code generator.

Similarly, for periodic ranging, the initial ranging band separating unit 405 and the initial ranging code multiplying units 407a and 407b in FIG. 4 must be replaced by a periodic ranging band separating unit and periodic ranging code multiplying units, respectively. Also, the initial ranging code generator 501 in FIG. 5 must be replaced by a periodic ranging code generator.

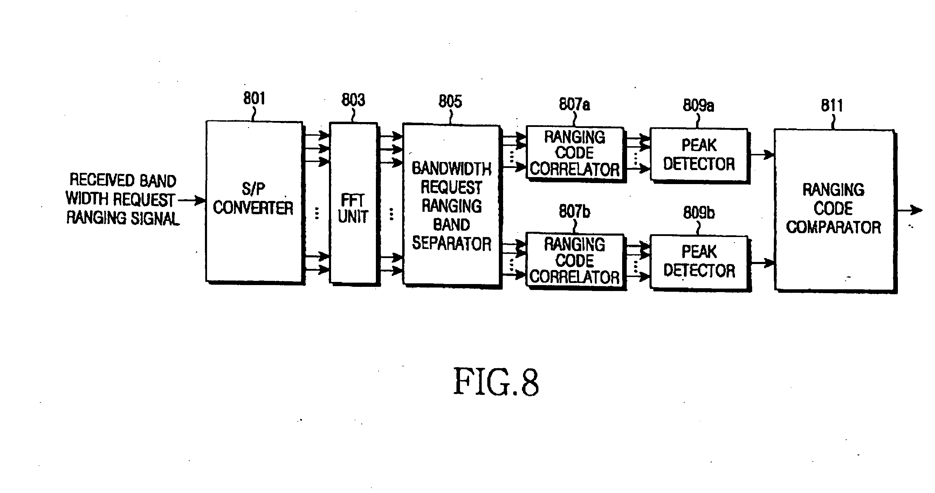

FIG. 8 illustrates a receiver for detecting bandwidth request ranging in accordance with an embodiment of the present invention. The receiver in FIG. 8 includes an S/P converting unit 801, an FFT unit 803, a bandwidth request ranging band separating unit 805, a plurality of ranging code correlating units 807a and 807b, a plurality of peak detecting units 809a and 809b, and a ranging code comparing unit 811.

Referring to FIG. 8, a bandwidth request ranging signal received from an SS is supplied to the S/P converting unit 801. The S/P converting unit 801 converts the bandwidth request ranging signal into parallel signals and outputs the converted parallel signals. The parallel bandwidth request ranging signals are supplied to the FFT unit 803. The FFT unit 803 performs fast Fourier transform to the parallel bandwidth request ranging signals to transform time-domain bandwidth request ranging signals into frequency-domain bandwidth request ranging signals and outputs the frequency-domain bandwidth request ranging signals. The parallel bandwidth request ranging signals transformed into the frequency-domain bandwidth request ranging signals are supplied to the bandwidth request ranging band separating unit 805.

The bandwidth request ranging band separating unit 805 separates ranging bands assigned for bandwidth request ranging from the respective parallel bandwidth request ranging signals. The bandwidth request ranging band separating unit 805 also extracts only sample values from the separated ranging bands and outputs the extracted sample values. The sample values are supplied to correspondent ranging code correlating units 807a and 807b.

Each of the ranging code correlating units 807a and 807b multiplies the supplied sample values by predetermined bandwidth request ranging codes, adds the resultant values to each other, and then outputs correlation values according to the sample values. That is, because the ranging code correlating units 807a and 807b evaluates correlations between all of the allowed bandwidth request ranging codes and the received signal, the output values from the ranging code correlating units 807a and 807b are correlation values between the respective bandwidth request ranging codes and the received signal. Therefore, the correlation values output from the ranging code correlating units 807a and 807b are determined by if the received bandwidth request ranging code corresponds to an already-known ranging code. For example, if the received bandwidth request ranging code corresponds to the already-known ranging code, autocorrelation between the two codes is high and a correlation value also has a peak value. However, if the received bandwidth request ranging code does not correspond to the already-known ranging code, autocorrelation between the two codes is low and a correlation value does not have a peak value.

The correlation values from the ranging code correlating unit 870a and 807b are supplied to corresponding peak detecting units 809a and 809b. The peak detecting units 809a and 809b detect indexes of the ranging codes corresponding to the correlation values, which exceed predetermined threshold values, from among the input correlation values. The peak detecting units 809a and 809b also supply the detected indexes of the ranging codes to the ranging code comparing unit 811.

The ranging code comparing unit 811 checks if identical ranging codes are detected from plural bandwidth request ranging bands. If identical ranging codes are detected, the ranging code comparing unit 811 replies to the SS that bandwidth request ranging is confirmed. However, if identical ranging codes are not detected, the ranging code comparing unit 811 does not reply to the SS that bandwidth request ranging is confirmed.

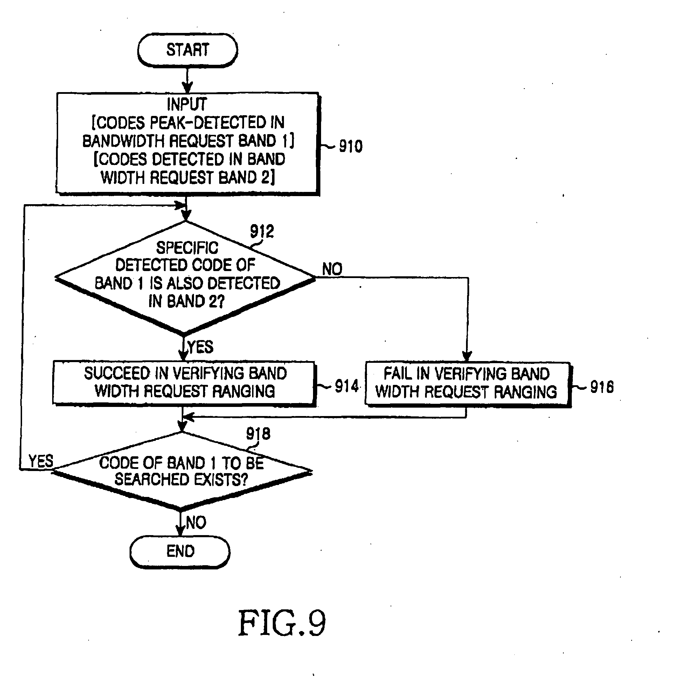

FIG. 9 illustrates a control flow for the ranging code comparing unit 811 illustrated in FIG. 8. That is, the ranging code comparing unit 811 determines success or failure in confirming bandwidth request ranging by the ranging codes provided from the peak detecting units.

Referring to FIG. 9, in step 910, the ranging code comparing unit 811 is provided with primary ranging code index determined as a peak value in primary bandwidth request band and secondary ranging code index determined as a peak value in secondary bandwidth request ranging band from the peak detecting units 809a and 809b. The ranging code comparing unit 811 then proceeds to step 912 to check if the primary and secondary ranging code indexes correspond to each other. If the primary ranging code index is equal to the secondary ranging code index, the ranging code comparing unit 811 proceeds to step 914, concluding that is has successfully confirmed bandwidth request ranging. However, if the primary ranging code index is not equal to the secondary ranging code index, the ranging code comparing unit 811 proceeds to step 916, concluding that it has failed to confirm bandwidth request ranging.

Once success or failure in confirming bandwidth request ranging is determined, the ranging code comparing unit 811 proceeds to step 918 to determine if a bandwidth request band to be searched exists. If the bandwidth request band to be searched exists, the ranging code comparing unit 811 returns to step 912 to repeat the above-mentioned operations. Otherwise, if the bandwidth request band to be searched does not exist, the ranging code comparing unit 811 terminates the operations for confirming bandwidth request ranging.

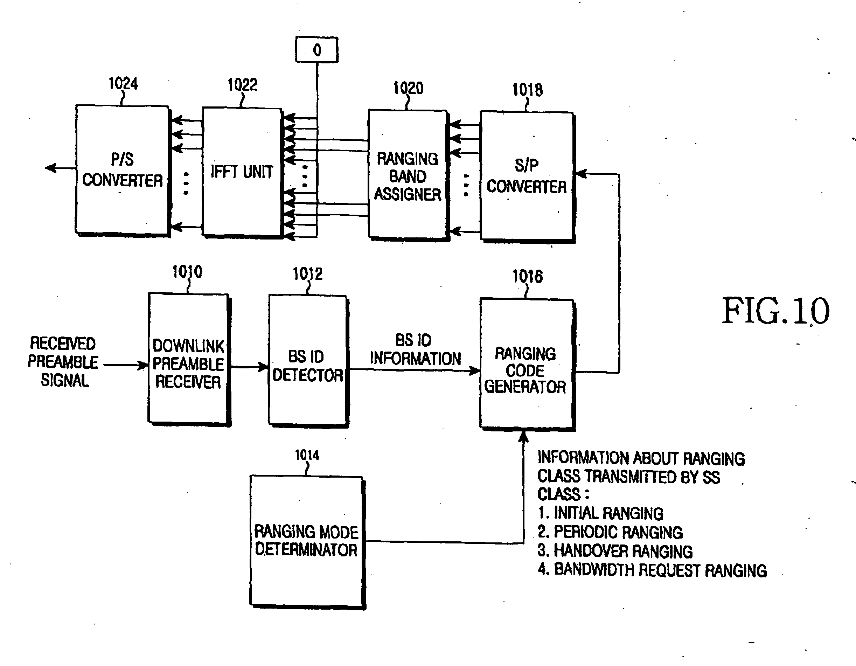

FIG. 10 illustrates a transmitter in accordance with an embodiment of the present invention. The transmitter illustrated in FIG. 10 includes a downlink preamble receiving unit 1010, a BS identifier (BS ID) detecting unit 1012, a ranging mode determining unit 1014, a ranging code generating unit 1016, an S/P converting unit 1018, a ranging band assigning unit 1020, an IFFT unit 1022, and a P/S converting unit 1024.

Referring to FIG. 10, the downlink preamble receiving unit 1010 extracts a preamble signal from a received signal from a BS and supplies the extracted preamble signal to the BS ID detecting unit 1012. The BS ID detecting unit 1012 acquires ID information corresponding to the BS from the preamble signal and outputs the ID information. The BS ID information is supplied to the ranging code generating unit 1016.

The ranging mode determining unit 1014 determines information on a ranging class and provides the determined information to the ranging code generating unit 1016. The ranging classes that are usually transmitted from an SS include initial ranging, periodic ranging, handover ranging, and bandwidth request ranging. Therefore, the ranging mode determining unit 1014 chooses one ranging class to be transmitted from among the above-mentioned four ranging classes. that is, the ranging mode determining unit 1014 may provide index corresponding to the chosen ranging class to the ranging code generating unit 1016. For example, '1' can be used as the index of initial ranging, '2' can be used as the index of periodic ranging, '3' can be used as the index of handover ranging, and '4' can be used as the index of bandwidth request ranging.

The ranging code generating unit 1016 generates ranging codes to be used in the BS ID information and the ranging class. The ranging codes generated by the ranging code generating unit 1016 are supplied to the S/P converting unit 1018. The S/P converting unit 1018 converts the ranging codes into parallel signals and then outputs the converted parallel signals.

The parallel ranging codes are supplied to the ranging band assigning unit 1020. The ranging band assigning unit 1020 assign at least two ranging bands which the ranging band assigning unit 1020 itself uses as a ranging channel in uplink frames. Consequently, the parallel ranging codes are output at the assigned ranging bands from the ranging band assigning unit 1020. The parallel ranging codes output from the ranging band assigning unit 1020 are input to the IFFT unit 1022.

Besides the parallel ranging codes, null data is further input to the IFFT unit 1022. The null data is inserted into regions of the uplink frame where the parallel ranging codes are not transmitted. Also, the null data can be used as data for compensating a shortage of the ranging codes when the ranging codes is not enough large to be transmittable through the ranging bands.

The IFFT unit 1022 performs inverse fast Fourier transform to the input ranging codes and null data to transform the frequency-domain signals into time-domain signals and output the time-domain signals. The transformed time-domain signals are supplied to the P/S converting unit 1024. The P/S converting unit 1024 converts the parallel signals to serial signals and transmits the serial signals to the BS.

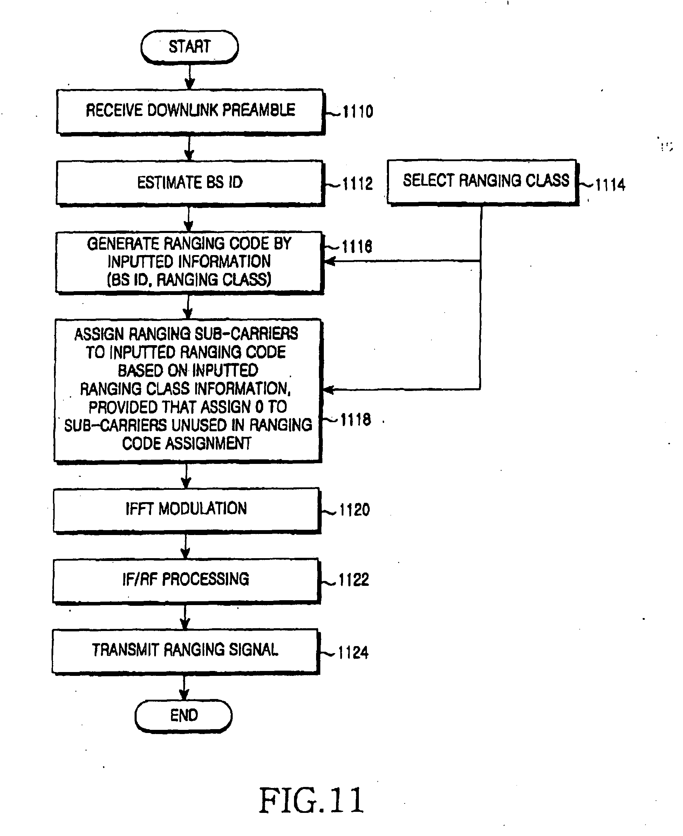

FIG. 11 illustrates a control flow for transmitting ranging codes according to an embodiment of the present invention. Referring to FIG. 11, an SS receives a signal from a BS and extracts a preamble signal form the received signal in step 1110. In step 1112, the SS estimates ID information corresponding to the BS using the extracted preamble signal.

In step 1114, the SS chooses ranging class to be transmitted from among ranging classes, which can be transmitted by the SS. As stated above, the ranging classes transmittable from the SS include initial ranging, periodic ranging, handover ranging, and bandwidth request ranging. Therefore, in step 1114, one ranging class for the transmission would be chosen from among the above-mentioned four ranging classes.

In step 1116, the SS generates ranging codes to be used in the estimated BS ID information and the chosen ranging class. The SS then proceeds to step 1118 to assign ranging sub-carriers (ranging channel or at least two ranging bands) to the ranging coded based on the ranging class, provided that the null data '0' is assigned to sub-carriers unused in the ranging code assignment.

In step 1120, the SS performs IFFT to the ranging signal constructed as described above and outputs a time-domain signal. Thereafter, the SS performs IF/RF processing to the time-domain signal in step 1122, and transmit the IF/RF processed ranging signal to the BS in step 1124.

As described above, the present invention proposes a ranging channel structure and a ranging receiver, which are suitable to cellular channel characteristic when ranging is attempted in a cellular communication environment, thereby reducing initial wireless access delay and handover latency. That is, when ranging codes are transmitted through a ranging channel using a principle that a frequency response of the channel is similar in a ranging band (a set of sub-carriers), signal interference between the ranging codes is reduced, such that a BS can identify all of the transmitted ranging codes.

Accordingly, the present invention is advantageous in that an access delay time is very short. Further, the present invention can also reduce the wasting of downlink resources (time/frequency resource), which is caused when the BS broadcast false information due to the erroneous detecting of ranging codes. Accordingly, the present invention provides a design in which it is possible to confirm ranging codes by transmitting a ranging signal through two ranging bands. Consequently, the ranging channel structure and the ranging receiver of the present invention can improve ranging performance.

The following is a list of further preferred embodiments of the invention:

Embodiment 1. A method for assigning a ranging channel in a broadband wireless communication system in which a subscriber station (SS) attempts ranging with a base station (BS), the method comprising the steps of:

determining at least two ranging bands, each of which uses a fixed frequency band, regardless of BSs within an entire frequency band; and
assigning at least one ranging channel to each of a plurality of uplink frames using the at least two ranging bands,

wherein the fixed frequency band is a set of sub-carriers, which consecutively exist on a frequency axis.

Embodiment 2. The method of embodiment 1, wherein when the at least one ranging channel is assigned to an uplink frame, ranging bands included in the at least one assigned ranging channel are alternately arranged on the frequency axis.

Embodiment 3. The method of embodiment 1, wherein the fixed frequency bands, which at least the two ranging bands use, respectively, are arranged at a certain distance on the frequency axis.

Embodiment 4. The method of embodiment 1, wherein a number of the ranging bands included in the ranging channel is determined by an involution of 2.

Embodiment 5. The method of embodiment 1, wherein the fixed frequency bands used for determining the at least two ranging bands do not overlap with a frequency band used for transmitting data.

Embodiment 6. The method of embodiment 1, wherein a number of the at least one ranging channel assigned per uplink frame can vary for each uplink frame.

Embodiment 7. A method for transmitting a ranging signal from a subscriber station (SS) to a base station (BS) in a broadband wireless communication system, the method comprising the steps of:

determining an uplink frame where ranging is to be attempted; and
transmitting ranging codes corresponding to a desired ranging class through at least one ranging band, which is included in a ranging channel assigned for the determined uplink frame,

wherein a fixed frequency band, regardless of BSs within an entire frequency band, is used as the ranging band, and the fixed frequency band is a set of sub-carriers, which consecutively exist on a frequency axis.

Embodiment 8. The method of embodiment 7, wherein the ranging channel is assigned for each uplink frame by the BS.

Embodiment 9. The method of embodiment 8, further comprising the step of receiving information on the assigned ranging channel, which is broadcasted by the BS.

Embodiment 10. The method of embodiment 7, further comprising the step of selecting one ranging channel of a plurality ranging channels, when the plurality of ranging channels are assigned for the determined uplink frame.

Embodiment 11. The method of embodiment 7, wherein a number of the at least one ranging band included in the ranging channel is determined by an involution of 2.

Embodiment 12. The method of embodiment 7, wherein a number of the ranging channels assigned per each uplink frame can vary for every uplink frame.

Embodiment 13. An apparatus for transmitting a ranging signal from a subscriber station (SS) to a base station (BS) in a broadband wireless communication system, the apparatus comprising:

a ranging band assigning unit for inputting ranging codes corresponding to a desired ranging class and outputting the ranging codes at at least one ranging band, which is included in a ranging channel assigned for an uplink frame where ranging is to be attempted; and
an inverse fast Fourier transform unit for transforming the ranging codes output at the at least one ranging band into time domain ranging bands,

wherein a fixed frequency band, regardless of BSs within an entire frequency band, is used as the ranging band, and the fixed frequency band is a set of sub-carriers, which consecutively exist on a frequency axis.

Embodiment 14. The apparatus of embodiment 13, wherein the ranging band assigning unit selects one ranging channel from a plurality of ranging channels, when the plurality of ranging channels are assigned for the uplink frame where ranging is to be attempted.

Embodiment 15. The apparatus of embodiment 13, further comprising a downlink preamble receiving unit for receiving information on a ranging channel which is assigned per uplink frame by the BS.

Embodiment 16. The apparatus of embodiment 13, further comprising a ranging code generating unit for generating ranging codes corresponding to a desired ranging class.

Embodiment 17. The apparatus of embodiment 16, further comprising a ranging mode determining unit for determining the desired ranging class.

Embodiment 18. A method for receiving a ranging signal from a subscriber station (SS) to a base station (BS) in a broadband wireless communication system, the method comprising the steps of:

receiving ranging codes through at least one ranging band, which is included in a ranging channel assigned for each uplink frame; and
performing ranging corresponding to the ranging codes,

wherein a fixed frequency band, regardless of BSs within an entire frequency band, is used as the ranging band, and the fixed frequency band is a set of sub-carriers that consecutively exist on a frequency axis.

Embodiment 19. The method of embodiment 18, further comprising the step of broadcasting information on the ranging channel assigned for each uplink frame to the SS.

Embodiment 20. The method of embodiment 18, wherein when a plurality of ranging channels are assigned for the uplink frame, the ranging codes are received through respective ranging channels.

Embodiment 21. The method of embodiment 18, wherein a number of the at least one ranging band included in the ranging channel is determined by an involution of 2.

Embodiment 22. The method of embodiment 18, wherein a number of the ranging channels assigned for each uplink frame can vary for each uplink frame.

Embodiment 23. An apparatus for receiving a ranging signal from a subscriber station (SS) to a base station (BS) in a broadband wireless communication system, the apparatus comprising:

a ranging band separating unit for separating at least one ranging band, which is included in a ranging channel assigned for each uplink frame, from a received ranging signal and extracting sample values from the separated at least one ranging band; and

a ranging code detecting unit for detecting ranging codes from the extracted sample values,

wherein a fixed frequency band, regardless of BSs within an entire frequency band, is used as the ranging band, and the fixed frequency band is a set of sub-carriers that consecutively exist on a frequency axis.

Embodiment 24. The apparatus of embodiment 23, wherein the ranging code detecting unit comprises:

a ranging code multiplying unit for multiplying the extracted sample values by predetermined ranging codes;

at least one sync detecting unit for taking a correlation between outputs from the ranging code multiplying unit and predetermined phase adjustment values, and outputting a phase adjustment value having a maximum correlation value; and

a sync comparing unit for comparing a plurality of phase adjustment values output from the at least one sync detecting unit with each other to output a maximum value as a ranging code.

Embodiment 25. The apparatus of embodiment 23, wherein the BS comprises a transmitter for broadcasting information on a ranging channel assigned for each uplink frame.

Embodiment 26. The apparatus of embodiment 23, wherein when a plurality of ranging channels are assigned for the uplink frame, the ranging code separating unit separates at least one ranging band included in the plural ranging channels.

Embodiment 27. The apparatus of embodiment 23, wherein a number of the at least one ranging band included in the ranging channel is determined by an involution of 2.

Embodiment 28. The apparatus of embodiment 23, wherein a number of ranging channels assigned for each uplink frame can vary for each uplink frame.

Embodiment 29. The apparatus of embodiment 25, wherein a number of ranging channels assigned for each uplink frame can vary for each uplink frame.

**Claims**

1. A method for transmitting a ranging signal from a subscriber station, SS, to a base station, BS, in a broadband wireless communication system, the method comprising the steps of:

   determining an uplink frame where ranging is to be attempted; and

   transmitting (1124) each ranging code corresponding to a desired ranging class through a ranging channel assigned for the determined uplink frame, wherein the ranging channel includes at least one ranging band, **characterized in that** a fixed frequency band, used for ranging in a cell comprising the BS and in neighboring cells of the cell, is used as the at least one ranging band, and the fixed frequency band is a set of sub-carriers, which consecutively exist on a frequency axis.

2. The method as claimed in claim 1, wherein the ranging channel is assigned for each uplink frame by the BS.

3. The method as claimed in claim 2, further comprising the step of receiving information on the assigned ranging channel, which is broadcasted by the BS.

4. The method as claimed in claim 1, further comprising the step of selecting one ranging channel of a plurality ranging channels, when the plurality of ranging channels are assigned for the determined uplink frame.

5. The method as claimed in claim 1, wherein a number of the at least one ranging band included in the ranging channel is determined by an involution of 2.

6. The method as claimed in claim 1, wherein a number of the ranging channels assigned per each uplink frame can vary for every uplink frame.

7. A system comprising at least two base stations comprised in cells neighboring each other and an apparatus for transmitting a ranging signal from a subscriber station, SS, to a base station, BS, of the at least two base stations, in a broadband wireless communication system, the apparatus comprising:

a ranging band assigning unit (1020) for inputting each ranging code corresponding to a desired ranging class and outputting the each ranging code at a ranging channel assigned for the determined uplink frame, the ranging channel including at least one ranging band, where ranging is to be attempted; and
an inverse fast Fourier transform unit (1022) for transforming the each ranging code output at the at least one ranging band into time domain ranging bands,
**characterized in that** a fixed frequency band, used for ranging in said cells neighboring each other, is used as the at least one ranging band, the at least two base stations are adapted to use the fixed frequency band for ranging, and the fixed frequency band is a set of sub-carriers, which consecutively exist on a frequency axis.

8. The system as claimed in claim 7, wherein the ranging band assigning unit (1020) selects one ranging channel from a plurality of ranging channels, when the plurality of ranging channels are assigned for the uplink frame where ranging is to be attempted.

9. The system as claimed in claim 7, further comprising a downlink preamble receiving unit for receiving information on a ranging channel which is assigned per uplink frame by the BS.

10. The system as claimed in claim 7, further comprising a ranging code generating unit (1016) for generating ranging codes corresponding to a desired ranging class.

11. The system as claimed in claim 10, further comprising a ranging mode determining unit (1014) for determining the desired ranging class.

**Patentansprüche**

1. Verfahren zum Senden eines Abstimmsignals von einer Teilnehmerstation zu einer Basisstation in einem Breitband-Drahtloskommunikationssystem, wobei das Verfahren die folgenden Schritte umfasst:

Bestimmen eines Uplink-Frame, in dem Abstimmung versucht werden soll; und
Senden (1124) jedes Abstimmcodes, der einer gewünschten Abstimmklasse entspricht, über einen Abstimmkanal, der dem bestimmten Uplink-Frame zugeordnet wird, wobei der Abstimmkanal wenigstens ein Abstimmband enthält,
**dadurch gekennzeichnet, dass**
ein festes Frequenzband, das zum Abstimmen in einer Zelle, die die Basisstation umfasst, und in zu der Zelle benachbarten Zellen verwendet wird, als das wenigstens eine Abstimmband verwendet wird, und das feste Frequenzband eine Gruppe von Zwischenträgern ist, die auf einer Frequenzachse aufeinanderfolgend vorhanden sind.

2. Verfahren nach Anspruch 1, wobei der Abstimmkanal durch die Basisstation jedem Uplink-Frame zugeordnet wird.

3. Verfahren nach Anspruch 2, das des Weiteren den Schritt des Empfangens von Informationen über den zugeordneten Abstimmkanal umfasst, die durch die Basisstation rundgesendet werden.

4. Verfahren nach Anspruch 1, das des Weiteren den Schritt des Auswählens eines Abstimmkanals einer Vielzahl von Abstimmkanälen umfasst, wobei die Vielzahl von Abstimmkanälen dem bestimmten Uplink-Frame zugeordnet werden.

5. Verfahren nach Anspruch 1, wobei eine Anzahl des wenigstens einen Abstimmbandes, das in dem Abstimmkanal enthalten ist, durch eine Involution von 2 bestimmt wird.

6. Verfahren nach Anspruch 1, wobei eine Anzahl der Abstimmkanäle, die jeweils pro Uplink-Frame zugeordnet werden, für jeden Uplink-Frame variieren kann.

7. System, das wenigstens zwei Basisstationen, die in Zellen enthalten sind, die zueinander benachbart sind, und eine Vorrichtung zum Senden eines Abstimmsignals von einer Teilnehmerstation zu einer Basisstation der wenigstens zwei Basisstationen in einem Breitband-Drahtloskommunikationssystem umfasst, wobei die Vorrichtung umfasst:

   eine Abstimmband-Zuordnungseinheit (1020) zum Eingeben jedes Abstimmcodes, der einer gewünschten Abstimmklasse entspricht, und zum Ausgeben jedes Abstimmcodes auf einem Abstimmkanal, der dem bestimmten Uplink-Frame zugeordnet wird, wobei der Abstimmkanal wenigstens ein Abstimmband enthält, in dem Abstimmung versucht werden soll; und
   eine Einheit (1022) für inverse schnelle Fouriertransformation zum Transformieren jedes in dem wenigstens einen Abstimmband ausgegebenen Abstimmcodes in Zeitdomänen-Abstimmbänder,
   **dadurch gekennzeichnet, dass** ein festes Frequenzband, das für Abstimmen in den zueinander benachbarten Zellen verwendet wird, als das wenigstens eine Abstimmband verwendet wird, die wenigstens zwei Basisstationen so eingerichtet sind, dass sie das feste Frequenzband zum Abstimmen verwenden, und das feste Frequenzband eine Gruppe von Zwischenträgern ist, die auf einer Frequenzachse aufeinanderfolgend vorhanden sind.

8. System nach Anspruch 7, wobei die Frequenzband-Zuordnungseinheit (1020) einen Abstimmkanal aus einer Vielzahl von Abstimmkanälen auswählt, wenn die Vielzahl von Abstimmkanälen dem Uplink-Frame zugeordnet werden, in dem Abstimmung versucht werden soll.

9. System nach Anspruch 7, das des Weiteren eine Downlink-Präambel-Empfangseinheit zum Empfangen von Informationen über einen Abstimmkanal umfasst, der durch die Basisstation pro Uplink-Frame zugeordnet wird.

10. System nach Anspruch 7, das des Weiteren eine Abstimmcode-Erzeugungseinheit (1016) zum Erzeugen von Abstimmcodes umfasst, die einer gewünschten Abstimmklasse entsprechen.

11. System nach Anspruch 10, das des Weiteren eine Abstimmmodus-Bestimmungseinheit (1014) zum Bestimmen der gewünschten Abstimmklasse umfasst.

**Revendications**

1. Un procédé pour la transmission d'un signal de mesure de distance (ranging signal) à partir d'un poste d'abonné, SS (Subscriber Station), à un poste de base, BS (Base Station), dans un système de communication sans fil à large bande, le procédé comprenant les étapes de :

   détermination d'une trame de liaison montante où la mesure de distance doit être tentée ; et
   transmission (1124) de chaque code de mesure de distance correspondant à une classe de mesure de distance souhaitée à travers un canal de mesure de distance affecté à la trame de liaison montante déterminée, où le canal de mesure de distance inclut au moins une bande de mesure de distance,
   **caractérisé par le fait qu'**
   une bande de fréquence fixée, utilisée pour la mesure de distance dans une cellule comprenant le poste de base BS et dans des cellules voisines de la cellule, est utilisée comme la, au moins une, bande de mesure de distance, et que la bande de fréquence fixée est un ensemble de sous-porteuses, qui existent consécutivement sur un axe de fréquence.

2. Le procédé selon la revendication 1, où le canal de mesure de distance est affecté pour chaque trame de liaison par le BS.

3. Le procédé selon la revendication 2, comprenant en outre l'étape de réception de l'information sur le canal de mesure de distance affecté, qui est diffusé par le BS.

4. Le procédé selon la revendication 1, comprenant en outre l'étape de sélection d'un canal de mesure de distance parmi une pluralité de canaux de mesure de distance, lorsque la pluralité de canaux de mesure de distance sont assignés pour la trame de liaison montante déterminée.

5. Le procédé selon la revendication 1, où un nombre des, au moins une, bandes de mesure de distance dans le canal de mesure de distance est déterminé par une involution de 2.

**6.** Le procédé de la revendication 1, où un nombre de canaux de mesure de distance assignés par trame de liaison montante peut varier pour chaque trame de liaison montante.

**7.** Un système comprenant au moins deux postes de base compris dans des cellules voisines les unes des autres et un appareil pour la transmission d'un signal de mesure de distance depuis un poste d'abonné, SS (Subscriber Station), à un poste de base, BS (Base Station), des au moins deux postes de base, dans un système de communication sans fil à large bande, l'appareil comprenant :

une unité d'affectation de bande de mesure de distance (1020) pour l'entrée de chaque code de mesure de distance correspondant à une classe de mesure de distance souhaitée et la sortie de chaque code de mesure de distance à un canal de mesure de distance affecté pour la trame de liaison montante déterminée, le canal de mesure de distance incluant au moins une bande de mesure de distance, où la mesure de distance doit être tentée ; et
une unité de transformation de Fourier rapide inverse (1022) pour la transformation de la sortie de chaque code de mesure de distance à la, au moins une, bande de mesure de distance en bandes de mesure de distance dans le domaine de temps,
**caractérisé par le fait qu'**
une bande de fréquence fixée, utilisée pour la mesure de distance dans desdites cellules voisines les unes des autres, est utilisée comme la, au moins une bande de mesure de distance, les, au moins deux, postes de base sont adaptés pour utiliser la bande de fréquence fixé pour la mesure de distance, et la bande de fréquence fixée est un ensemble de sous-porteuses, qui existent consécutivement sur un axe de fréquence.

**8.** Le système revendiqué selon la revendication 7, où l'unité d'affectation de bande de mesure de distance (1020) sélectionne un canal de mesure de distance à partir d'une pluralité de canaux de mesure de distance, lorsque la pluralité de canaux de mesure de distance sont affectés pour la trame de liaison montante où la mesure de distance doit être tentée.

**9.** Le système revendiqué selon la revendication 7, comprenant en outre une unité de réception en préambule de liaison descendante pour la réception d'information sur un canal de mesure de distance qui est affecté par trame de liaison montante par le BS.

**10.** Le système revendiqué selon la revendication 7, comprenant en outre une unité de génération de code de mesure de distance (1016) pour la génération de codes de mesure de distance correspondant à une classe de mesure de distance souhaitée.

**11.** Le système revendiqué selon la revendication 10, comprenant en outre une unité de détermination de mode de mesure de distance (1014) pour la détermination de la classe de détermination de mesure de distance souhaitée.

FIG.1

FIG.2

FIG.3A

FIG.3B

FIG.3C

EP 1 883 175 B1

FIG.4

407a AND 407b

OUTPUT SIGNAL FROM
INITIAL RANGING
BAND SEPARATOR

INITIAL RANGING
CODE GENERATOR ～501

FIG.5

FIG.6

START

$\Delta t_1$ & $\Delta t_2$ INPUT ~710

$|\Delta t_1 - \Delta t_2| <$ Allowed time $-$offset   712   NO

YES

$\hat{\Delta t} = \dfrac{\Delta t_1 - \Delta t_2}{2}$ ~714

END

FIG.7

FIG.8

START

INPUT
[CODES PEAK-DETECTED IN
BANDWIDTH REQUEST BAND 1]
[CODES DETECTED IN BAND
WIDTH REQUEST BAND 2]
— 910

912
SPECIFIC
DETECTED CODE OF
BAND 1 IS ALSO DETECTED
IN BAND 2?

NO

YES

SUCCEED IN VERIFYING BAND
WIDTH REQUEST RANGING
— 914

FAIL IN VERIFYING BAND
WIDTH REQUEST RANGING
— 916

918
CODE OF BAND 1 TO BE
SEARCHED EXISTS?

YES

NO

END

FIG.9

FIG.10

```
                    ┌─────────┐
                    │  START  │
                    └────┬────┘
                         ▼
        ┌─────────────────────────────┐
        │   RECEIVE DOWNLINK PREAMBLE  ├─1110
        └──────────────┬──────────────┘
                       ▼
 ┌──────────────────────────────┐          ┌──────────────────────┐
 │        ESTIMATE BS ID         ├─1112     │  SELECT RANGING CLASS ├─1114
 └──────────────┬───────────────┘          └───────────┬──────────┘
                ▼                                       │
 ┌──────────────────────────────┐                      │
 │   GENERATE RANGING CODE BY    ├─1116                 │
 │      INPUTTED INFORMATION     │◄─────────────────────┤
 │   (BS ID, RANGING CLASS)      │                      │
 └──────────────┬───────────────┘                      │
                ▼                                       │
 ┌──────────────────────────────┐                      │
 │  ASSIGN RANGING SUB-CARRIERS  │                      │
 │   TO INPUTTED RANGING CODE    │                      │
 │        BASED ON INPUTTED      │                      │
 │   RANGING CLASS INFORMATION,  │◄─────────────────────┘
 │    PROVIDED THAT ASSIGN 0 TO  │
 │  SUB-CARRIERS UNUSED IN RANGING├─1118
 │       CODE ASSIGNMENT         │
 └──────────────┬───────────────┘
                ▼
 ┌──────────────────────────────┐
 │        IFFT MODULATION        ├─1120
 └──────────────┬───────────────┘
                ▼
 ┌──────────────────────────────┐
 │        IF/RF PROCESSING       ├─1122
 └──────────────┬───────────────┘
                ▼
 ┌──────────────────────────────┐
 │     TRANSMIT RANGING SIGNAL   ├─1124
 └──────────────┬───────────────┘
                ▼
           ┌─────────┐
           │   END   │
           └─────────┘
```

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003198179 A1
- WO 0207375 A